(19) **Europäisches Patentamt / European Patent Office / Office européen des brevets**

(11) **EP 1 001 510 B1**

(12) **FASCICULE DE BREVET EUROPEEN**

(45) Date de publication et mention
de la délivrance du brevet:
**05.09.2012 Bulletin 2012/36**

(51) Int Cl.:
*H02K 26/00* (2006.01)   *H01F 7/14* (2006.01)

(21) Numéro de dépôt: **99402747.2**

(22) Date de dépôt: **04.11.1999**

(54) **Actionneur électromagnétique rotatif comprenant au moins un aimant encastré dans un materiau ferromagnétique.**

Elektromagnetischer Drehantrieb mit mindestens einem in ferromagnetischem Material eingebetteten Magneten

Electromagnetic rotary actuator with at least one magnet embedded in soft magnetic material

(84) Etats contractants désignés:
**AT BE CH CY DE DK ES FI FR GB GR IE IT LI LU MC NL PT SE**

(30) Priorité: **13.11.1998 FR 9814284**

(43) Date de publication de la demande:
**17.05.2000 Bulletin 2000/20**

(73) Titulaire: **MOVING MAGNET TECHNOLOGIES S.A.**
**25000 Besançon (FR)**

(72) Inventeurs:
• **Gandel, Pierre**
**25660 Montfaucon (FR)**
• **Besson, Christophe**
**25000 Besançon (FR)**

(74) Mandataire: **Breesé, Pierre et al**
**Fidal Innovation**
**32, place Ronde**
**92035 Paris la Defense cedex (FR)**

(56) Documents cités:
**EP-A- 0 558 362    EP-A- 0 630 098**
**WO-A-96/34448    FR-A- 2 670 629**
**US-A- 4 510 403**

EP 1 001 510 B1

**Description**

La présente invention concerne le domaine des actionneurs électromagnétiques monophasés rotatifs, c'est-à-dire des dispositifs électromagnétiques présentant une course limitée, contrairement aux moteurs qui présentent une course illimitées. Des actionneurs sont destinés au positionnement précis, avec une bonne répétabilité, d'un organe associé, avec un couple constant sur toute la course, avec une loi de commande simple, et de préférence linéaire, évitant l'utilisation de circuits de pilotage complexes.

On connaît dans l'état de la technique de nombreux types d'actionneurs monophasés rotatifs comportant un organe fixe constitué par un premier circuit magnétique statorique réalisé en un matériau de très haute perméabilité magnétique excité par au moins une bobine d'excitation et un organe mobile constitué par un disque aimanté axialement.

Le brevet américain US4510403 décrit par exemple un actionneur comportant un aimant central épais. De tels actionneurs ne fournissent pas un couple constant, et présentent un couple de rappel en position central.

De façon générale, il est connu de remédier à ces inconvénient en utilisant des aimants minces aimantés transversalement dans le sens de la plus petite dimension, perpendiculairement aux surfaces polaires. Ce disque aimanté présente 2N paires de pôles magnétiques aimantés en sens alterné. L'aimantation est pratiquement uniforme. Le disque aimanté est accolé à un second circuit magnétique réalisé en un matériau de haute perméabilité magnétique. L'organe mobile est muni d'un axe d'accouplement destiné à transmettre le couple.

A titre d'exemple, de tels actionneurs sont décrits dans la demande de brevet français EP558362 de la demanderesse.

Ces actionneurs présentent un couple constant pour un courant donné, et un couple proportionnel au courant appliqué à la bobine d'excitation. Ils présentent toutefois un aimants de haute énergie peuvent introduire des particules, par exemple des copeaux métalliques, dans les actionneurs au moment de leur mise en place sur l'organe mobile. Pour éviter cet inconvénient, il est connu d'encapsuler les aimants, solution coûteuse qui présente l'inconvénient d'accroître encore le prix de revient des actionneurs.

Il est également connu de l'état de la technique les documents US 5,038,064 et EP 0 844 722. Toutefois, ces documents qui décrivent des actionneurs comportant des parties aimantées placées dans un entrefer et juxtaposées à une partie ferromagnétique ne permettent pas d'augmenter suffisamment le couple de l'actionneur.

En outre, le document FR2386179 présente un actionneur dont la partie rotorique présente des zones mortes et dont l'entrefer entre les parties ferromagnétiques n'est pas constant durant sa course. Cette configuration n'est malheureusement pas acceptable dans la mesure où le couple produit n'est ni optimal ni constant vis-à-vis du courant fourni.

Pour remédier à ces inconvénients, l'invention propose un actionneur électromagnétique rotatif performant de moindre coût de fabrication, comportant à couples identiques une masse d'aimant plus faible que les actionneurs de l'art antérieur. Ces aimants sont, de préférence, tous aimantés dans le même sens, ce qui autorise une aimantation postérieurement à l'assemblage de l'organe mobile, et évite donc la manipulation d'aimants de haute énergie susceptibles d'introduire des copeaux métalliques dans l'actionneur en cours de fabrication.

L'invention concerne selon son acception la plus générale un actionneur électromagnétique rotatif selon la revendication 1.

Selon un mode de réalisation particulier, l'organe fixe comprend une partie statorique présentant 2N pièces polaires semi-annulaires entourées chacune par une bobine d'excitation.

Selon une première variante, l'organe fixe comprend une seconde partie statorique symétrique à la première partie statorique, présentant également 2N pièces

L'organe mobile présente de ce fait un escalier ferromagnétique d'épaisseur qui crée un effet de reluctance variable et qui donne un coupe en début de course proportionnel au carré des ampère-tours appliqués aux bobines.

Avantageusement, la largeur d'une des parties aimantées $Y_a$ mesurée sur son diamètre moyen est égale à

$$C + S + 2E'$$

où C est la largeur de l'arc angulaire parcourue par le rotor sur le diamètre moyen des parties aimantées, S est la largeur mesurée sur le diamètre moyen des parties aimantées entre deux pôles statoriques adjacents, E' est compris entre E/2 et E,
avec

$$\frac{C + 2E'}{E} > 3$$

et

$$\frac{L}{E} > 0.75 \text{ , de préférence } 0.8 < \frac{L}{E} < 0.9 \text{ ,}$$

L désignant l'épaisseur d'une partie aimantée dans le sens de l'aimantation, afin d'assurer un couple dû au courant sensiblement constant le long de la course et sensiblement proportionnel au courant.

Selon une variante préférée, les pièces ferromagnétiques intercalaires de la partie mobile ont une épaisseur e dans la direction du sens d'aimantation des parties aimantées d'épaisseur L, telle que : $0 < e/L < 0.6$.

Selon un mode de réalisation particulier, l'organe fixe comprend une partie statorique présentant 2N pièces polaires semi-annulaires entourées chacune par une bobine d'excitation.

Selon une première variante, l'organe fixe comprend une seconde partie statorique symétrique à la première partie statorique, présentant également 2N pièces polaires semi-annulaires entourées chacune par une bobine d'excitation.

Selon une deuxième variante, l'organe mobile est formé par une culasse rotative portant N aimants aimantés axialement et N parties intercalaires ferromagnétiques.

Selon un autre mode de réalisation, l'organe mobile est de forme tubulaire et porte N aimants en forme de tuile, aimantés radialement et N parties intercalaires ferromagnétiques. L'organe fixe présente 2N pôles statoriques de forme semi-tubulaire.

Selon une variante préférée, l'organe mobile comporte N aimants aimantés après leur mise en place sur l'organe mobile.

Selon un mode de réalisation préféré, l'organe mobile comporte N aimants logés dans des cavités prévues dans la culasse de l'organe mobile, les zones complémentaires à ces cavités formant les parties intercalaires ferromagnétiques.

Dans les différentes variantes de réalisation, le volume d'une partie intercalaire ferromagnétique peut être égal au volume d'un aimant, il ne s'agit toutefois pas d'une contrainte nécessaire mais d'un cas particulier. Lorsque l'aimant ou les aimants sont logés dans une cavité ou une cannelure pratiquée dans le rotor, l'aimant peut affleurer à la surface du rotor, ou être renfoncé dans le rotor ou au contraire dépasser à la surface du rotor.

Lorsque l'actionneur n'est pas saturé, à l'intérieur de la course utile, le couple peut être décomposé en trois composantes : le couple magnétostatique $C_0$ (sans courant), souvent négligeable, un terme de couple polarisé $C_{ni}$ proportionnel aux ampères-tours, et un terme de couple $C_{ni^2}$ proportionnel au carré des ampères-tours, dû à la réluctance variable engendrée par les parties intercalaires ferromagnétiques d'épaisseur e :

$$C = C_0 + C_{ni} + C_{ni^2}$$

Sans parties intercalaires ferromagnétiques, e=0, $C_{ni^2} = 0$.

Pour une valeur d'ampères-tours donnée, les trois termes de couple augmentent lorsque l'on augmente l'épaisseur e des parties intercalaires ferromagnétiques.

Pour les faibles épaisseurs e de parties intercalaires ferromagnétiques et/ou pour les faibles valeurs d'ampères-tours, l'actionneur présente un couple quasiment proportionnel au courant et quasiment constant le long de la course ($C_{ni^2}$ est négligeable), par contre, le couple est augmenté par rapport au cas sans parties intercalaires ferromagnétiques (e=0).

Pour des épaisseurs de parties intercalaires ferromagnétiques importantes le couple est fortement augmenté, mais lorsque les ampères-tours deviennent importants, le couple n'est plus proportionnel au courant, son allure n'est plus constante le long de la course, en raison de la réluctance variable engendrée par les parties ferromagnétiques intercalaires, ce qui n'est pas gênant dans certaines applications et peut même quelque fois être exploité.

Lorsqu'un couple crête de 2 à 3 fois le couple nominal est nécessaire sur toute la course il faut limiter le rapport e/L où e est l'épaisseur d'une pièce ferromagnétique et L la longueur d'un aimant dans le sens de l'aimantation, pour ne pas saturer le noyau de bobine en fin de course par excès d'inductance. Un rapport $e/L < 0.6$ est alors souhaitable.

L'épaisseur des parties intercalaires ferromagnétiques est alors choisie de façon judicieuse, par un calcul approprié, afin d'adapter et d'optimiser le couple fourni par l'actionneur pour une application donnée.

L'invention sera mieux comprise à la lecture de la description qui suit, se référant aux dessins annexés concernant des exemples non limitatifs de réalisation, où :

- la figure 1 représente une vue éclatée d'un actionneur rotatif selon l'invention ;
- les figures 2 et 3 représentent des vues respectivement en coupe axiale et transversale dudit actionneur ;
- la figure 4 représente une vue d'une variante de réalisation de l'organe mobile ;
- la figure 5 représente une vue d'un actionneur symétrique avec deux stators ;
- la figure 6 représente une variante de réalisation tubulaire ;
- la figure 7 présente une vue schématique faisant apparaître les différentes dimensions ;

les figures 8 à 12 représentent des variantes de réalisation.

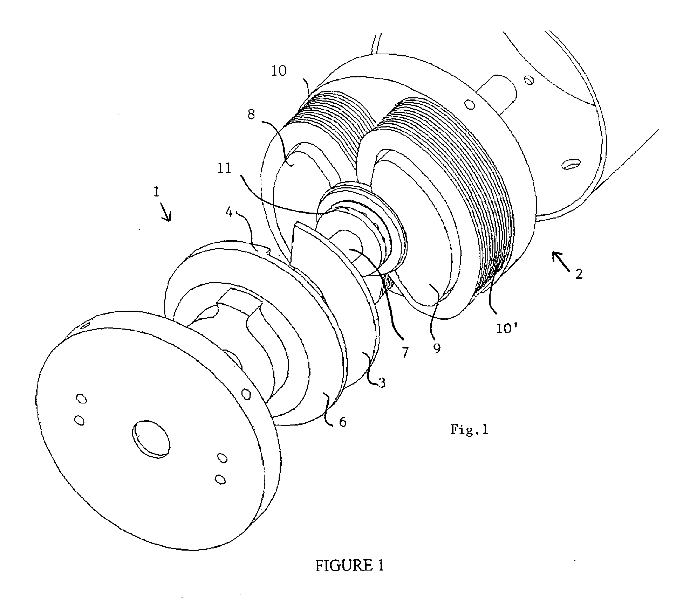

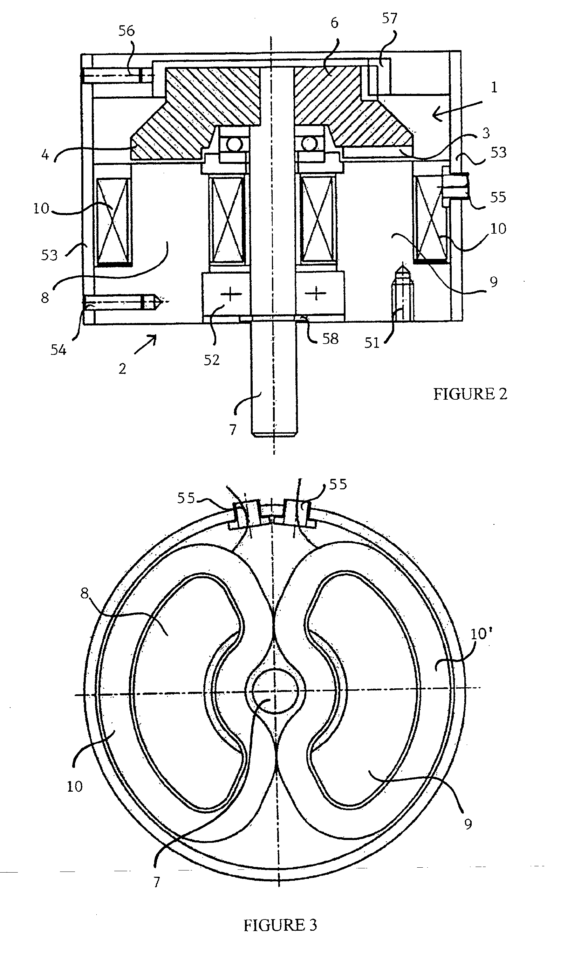

Les figures 1 à 3 représentent un actionneur rotatif selon un premier mode de réalisation de la présente invention, respectivement en vue éclatée, en coupe axiale et en coupe transversale.

L'actionneur est constitué par un organe mobile (1) et par un organe fixe (2). L'organe mobile comporte un aimant plat (3) en forme de demi-disque aimanté dans le sens de l'épaisseur et s'étendant sur 180° lorsque l'on recherche la course maximale. Lorsqu'une course moindre est considérée comme satisfaisante, cet angle peut être réduit à environ 150° à 160°. Il peut être réalisé selon différentes méthodes connues dans l'état de la technique, par exemple par aimantation d'un disque en Néodyme-Fer-Bore à l'aide d'une tête d'aimantation, de préférence après l'assemblage de l'organe mobile. La partie complémentaire à l'aimant est constituée par une partie ferromagnétique (4) dont l'épaisseur e est déterminée de manière à optimiser le couple.

L'aimant (3) est collé dans le mode de réalisation décrit sur un circuit rotorique mobile (6), solidaire de l'axe d'accouplement (7). La partie statorique fixe (2) et la partie rotorique mobile (6), peuvent être réalisées en fer doux usiné, fritté et/ou moulé, ou encore en un alliage fer-nickel.

L'organe fixe (2) comprend deux pôles (8, 9) entourés par des bobines (10, 10') bobinées à spires jointives. Les deux bobines (10) et (10') entourent respectivement les deux parties polaires (8) et (9) en évitant le canal de passage de l'axe (7).

Les dimensions du circuit magnétique fixe (2) et du circuit magnétique mobile (6) sont déterminées de façon connue de façon à permettre le passage de la totalité du flux magnétique en jeu pour les ampères-tours fixés, compte tenu des conditions de température, sans saturation.

La liaison entre la partie mobile (1) et la partie fixe (2) est réalisée par une butée à bille (11) définissant l'entrefer. Le diamètre extérieur de la butée à billes est sensiblement égal au diamètre interne de l'alésage de l'aimant afin de bien encaisser les efforts s'exerçant sur l'axe (7).

L'axe d'accouplement (7) traverse l'organe fixe (2). La partie rotorique mobile (6) est de forme conique de façon à réduire l'inertie de l'organe mobile, tout en permettant un passage satisfaisant du flux magnétique. L'actionneur selon cette variante permet une fixation par l'intermédiaire de trous de fixation (51) taraudés, prévus dans la masse de la partie statorique (2). Un palier (52) limite le jeu latéral de l'axe (7). L'actionneur est monté dans un boîtier (53) en matière plastique moulée ou en métal non magnétique ou très peu magnétique. Une goupille (54) immobilise la partie statorique fixe (2) par rapport audit boîtier (53). Un orifice latéral (55) permet le passage des fils d'alimentation des bobinages électriques (10). Le couvercle (56) du boîtier (53) présente une butée (57) limitant l'angle de rotation du rotor (1). Un circlips (58) monté sur l'axe (7) limite l'amplitude du jeu axial et évite qu'une force appliquée trop brutalement sur l'extrémité de l'axe ne provoque des dommages au niveau de l'organe mobile ou du couvercle. Ce circlips n'est toutefois pas destiné à positionner axialement l'organe mobile (6) par rapport à la partie statorique (2), ce positionnement étant essentiellement assuré par les phénomènes magnétiques.

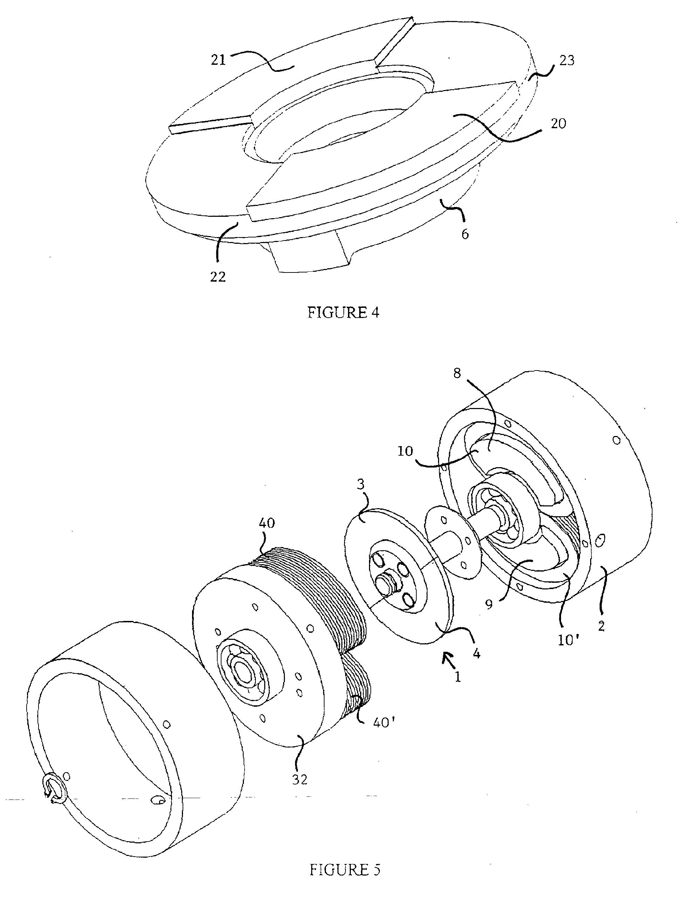

La figure 4 représente une vue de trois quart face du rotor selon une variante de l'invention avec N=2. Le rotor présente deux aimants (20, 21), aimantés axialement, dans le même sens, les deux aimants étant diamétralement opposés. Entre les deux aimants (20, 21), l'organe mobile comporte des parties intercalaires (22, 23) ferromagnétiques dont l'épaisseur est choisie de façon à optimiser le couple. Ces parties intercalaires ferromagnétiques peuvent être constituées par des pièces rapportées collées sur la culasse (6). De préférence, elles sont formées par les parties saillantes de la culasse (6) présentant des cavités pour le logement des aimants (20, 21).

La figure 5 représente une vue d'un actionneur symétrique avec deux stators. L'actionneur comporte un premier circuit statorique (2) et un second circuit statorique (32) disposée symétriquement par rapport à l'organe mobile (1). Chacun des circuits statoriques (2, 32) comporte deux pôles statoriques (8, 9), les pôles statoriques du deuxième circuit n'étant pas visibles sur la figure 5, les pôles statoriques étant entourés de bobines (10, 10', 40, 40'). L'organe mobile (1) est composé d'une partie aimantée (3) et d'une partie ferromagnétique (4).

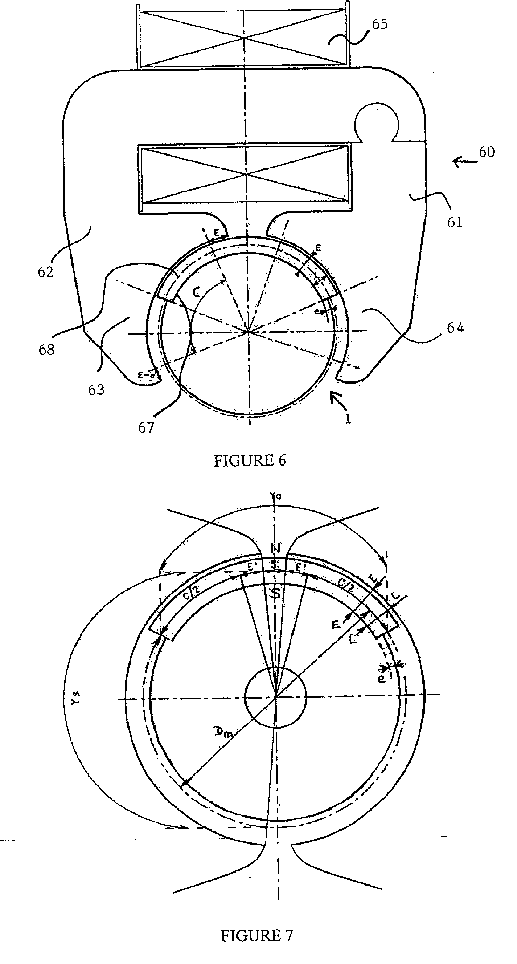

La figure 6 représente une variante de réalisation d'un actionneur tubulaire. L'organe fixe est formé par un stator (60) présentant une section transversale en fer à cheval, chaque extrémité (61, 62) étant prolongée par un pôle statorique (63, 64) en forme de tuile. Le stator est excité par une bobine (65). Le rotor (1) est constitué par une pièce en fer doux de forme cylindrique, présentant une cannelure (67) dans laquelle est logé un aimant (68) en forme de tuile semi-cylindrique.

La figure 7 présente les différentes dimensions. La partie aimantée, de largeur $Y_a$, est disposée dans un entrefer E et juxtaposée à une partie ferromagnétique d'épaisseur e définissant un second entrefer de longueur E-e. La course C est la largeur de l'arc angulaire parcourue par le rotor sur le diamètre moyen $D_m$ de la partie aimantée. S est la largeur mesurée sur le diamètre moyen des aimants entre deux pôles statoriques adjacents. L est l'épaisseur d'une partie aimantée dans le sens de l'aimantation.

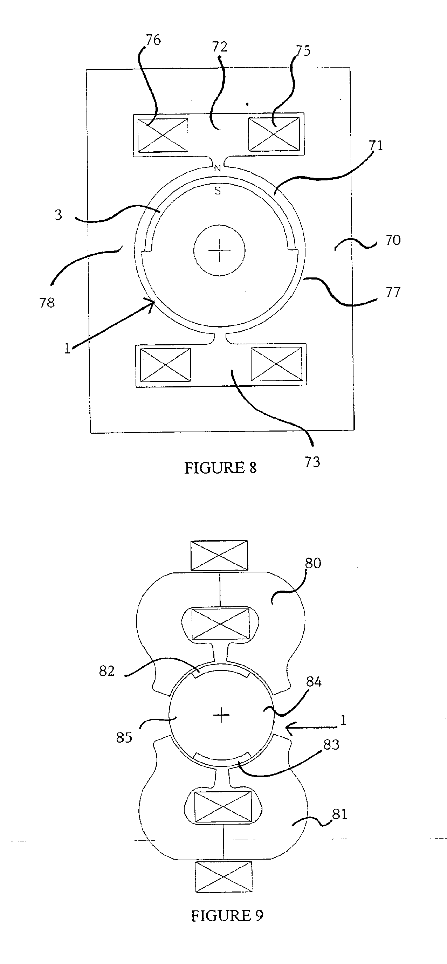

La figure 8 représente une variante de réalisation d'un actionneur rotatif tubulaire. Le stator est formé par une carcasse (70) présentant une cavité centrale cylindrique (71) pour recevoir le rotor (1) de forme cylindrique, et deux cavités (72, 73) sensiblement rectangulaires, pour recevoir deux bobines (75, 76) excitant les pôles statoriques (77, 78) de forme semi-cylindrique. Le rotor présente une cannelure s'étend sur environ 180°, pour recevoir un aimant (3) aimanté radialement, en forme de tuile.

La figure 9 représente une variante de réalisation d'un actionneur tubulaire, comportant deux circuits statoriques (80, 81) dont la section présente la forme de fer à cheval, comme dans la variante représentée en figure 6, pour un seul circuit statorique. L'organe mobile (1) est en forme de cylindre et présente deux cannelures servant de logement pour des aimants (82, 83), aimantés radialement, de préférence dans le même sens. Les parties saillantes (84, 85) intercalaires entre ces cannelures forment les parties intercalaires en fer doux.

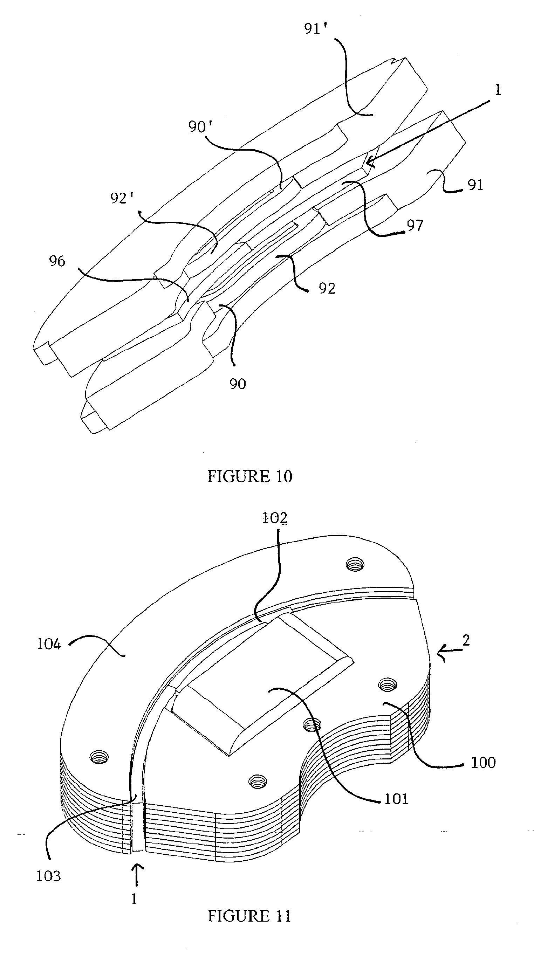

La figure 10 représente une vue partielle d'une variante de réalisation dans laquelle le rotor (1) est composé d'une partie aimantée (96) et d'une partie ferromagnétique (97) placées entre deux structures annulaires symétriques (91, 91') présentant chacune un logement (90, 90') pour recevoir une bobine plate (92, 92').

La figure 11 représente une vue partielle d'une variante de réalisation tubulaire dans laquelle le circuit statorique (2) est formé par une structure ferromagnétique (100) présentant un logement pour recevoir une bobine (101). Le rotor (1), composé d'une partie aimantée (102) et d'une partie ferromagnétique (103), est placé entre cette structure annulaire (100) et une culasse (104) également de forme annulaire.

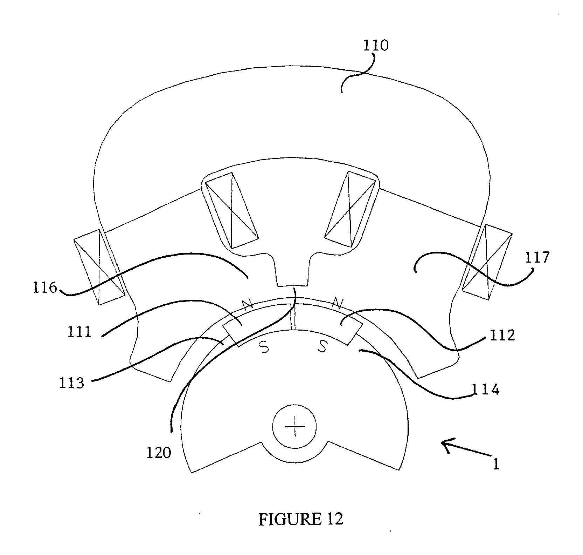

La figure 12 représente une variante de réalisation d'un actionneur tubulaire, comportant un circuit statorique (110) dont la section présente la forme de fer à cheval. L'organe mobile (1) est en forme de portion de cylindre et présente une cannelure servant de logement pour des aimants placés côte à côte (111, 112) aimantés radialement dans le même sens. Les parties saillantes (113, 114) juxtaposées à cette cannelure forment les parties intercalaires en fer doux. Les pôles statoriques (116,117) sont reliés par une pièce ferromagnétique fine saturable (120) afin d'atténuer l'effet de la transition des aimants sur la caractéristique de couple.

**Revendications**

1.  Actionneur électromagnétique rotatif de course limitée, comportant un stator (2) à plusieurs pôles excité par au moins une bobine d'excitation (10, 10' ; 40, 40' ; 65 ; 75 ; 76 ; 92, 92' ; 101) et un rotor (1, 6) comprenant N parties aimantées (3 ; 20, 21 ; 68 ; 82, 83 ; 96 ; 102 ; 111, 112) où N est un nombre entier, ces parties aimantées étant disposées dans un entrefer d'épaisseur E constante, **caractérisé en ce que** le stator comprend au moins 2N pôles et **en ce que** chaque partie aimantée est juxtaposée à un escalier formé par au moins une partie ferromagnétique (4 ; 22, 23, 84, 85, 113, 114) d'épaisseur e constante strictement comprise entre 0 et E, définissant un ou deux entrefers, d'épaisseur totale E-e.

2.  Actionneur électromagnétique rotatif selon la revendication 1, **caractérisé en ce qu'**il est monophasé.

3.  Actionneur électromagnétique rotatif selon la revendication 1 ou 2, **caractérisé en ce que** la largeur d'une des parties aimantées (3;20,21;68;82,83;96;102;111,112) $Y_a$ mesurée sur son diamètre moyen est égale à : C+S+2E' où C est la largeur de l'arc angulaire parcourue par le rotor (1,6) sur le diamètre moyen des parties aimantées (3; 20,21;58;82,83;96;102;111,112), S est la largeur mesurée sur le diamètre moyen des parties aimantées (3;20,21; 68;82,83;96;102;111,112) entre deux pôles statoriques adjacents, E' est compris entre E/2 et E, avec

$$\frac{C + 2E'}{E} > 3$$

et

$$\frac{L}{E} > 0.75 , \text{ de préférence } 0.8 < \frac{L}{E} < 0.9 ,$$

L désignant l'épaisseur d'une partie aimantée (3;20,21;68;82,83;96;102;111,112) dans le sens de l'aimantation, afin d'assurer un couple dû au courant sensiblement constant le long de la course et sensiblement proportionnel au courant.

**4.** Actionneur électromagnétique rotatif selon la revendication 1, **caractérisé en ce que** les pièces ferromagnétiques intercalaires (4;22,23,84,85,113,114) de la partie mobile (1,6) ont une épaisseur e dans la direction du sens d'aimantation des parties aimantées (3;20,21;68;82,83;96;102;111,112) d'épaisseur L, telle que : 0<e/L<0.6.

**5.** Actionneur électromagnétique rotatif selon l'une au moins des revendications précédentes **caractérisé en ce que** les N parties aimantées sont composées de plusieurs aimants juxtaposés.

**6.** Actionneur électromagnétique rotatif selon la revendication 1 **caractérisé en ce que** l'organe fixe (2) comprend une pièce statorique présentant 2N pièces polaires (8, 9) en forme de secteur tubulaire entourées chacune par une bobine d'excitation (10, 10').

**7.** Actionneur électromagnétique rotatif selon la revendication 1 **caractérisé en ce que** l'organe fixe (2) comprend une seconde pièce statorique (32) symétrique à la première pièce statorique, présentant également 2N pièces polaires semi-annulaires entourées chacune par une bobine d'excitation (40, 40').

**8.** Actionneur électromagnétique rotatif selon la revendication 1 **caractérisé en ce que** l'organe mobile (1) est formé par une culasse rotative portant les N parties aimantées (3), aimantées axialement, et N parties intercalaires ferromagnétiques (4).

**9.** Actionneur électromagnétique rotatif selon la revendication 1 **caractérisé en ce que** l'organe mobile (6) est de forme tubulaire ou semi-tubulaire et porte N parties aimantées (3;20,21;68;82,83) en forme de tuile, aimantées radialement et au moins une partie intercalaire ferromagnétique (4;22,23,84,85,113,114), et **en ce que** l'organe fixe (2) présente 2N pôles statoriques (63,64;77,78;116,117) de forme semi-tubulaire.

**10.** Actionneur électromagnétique rotatif selon l'une au moins des revendications précédentes **caractérisé en ce que** l'organe mobile (1,6) comporte N parties aimantées (3;20,21;68;82,83;96;102;111,112), aimantées après leur mise en place sur l'organe mobile (1,6).

**11.** Actionneur électromagnétique rotatif selon l'une au moins des revendications précédentes **caractérisé en ce que** l'organe mobile (1) comporte N parties aimantées (3;20,21;68;82,83;96;102;111,112) logées dans des cavités prévues dans la culasse (6) de l'organe mobile (1), les zones complémentaires à ces cavités formant les parties intercalaires ferromagnétiques (4;22,23,84,85,113,114).

**12.** Actionneur électromagnétique rotatif selon l'une au moins des revendications précédentes **caractérisé en ce que** les 2N pièces polaires ferromagnétiques du stator sont reliées entre elles par des isthmes ferromagnétiques saturables.

**Claims**

**1.** An electro-mechanical rotary actuator with limited travel, including a stator (2) with several poles turned on by at least one trip coil (10, 10'; 40, 40'; 65; 75; 76; 92,92'; 101) and a rotor (1, 6) including N magnetized parts (3; 20, 21; 68; 82, 83; 96; 102; 111, 112) where N is an integer, with such magnetized parts being positioned in an air gap having a constant thickness E, **characterized in that** the stator includes at least 2N poles and **in that** each magnetized part is positioned side by side with stairs composed of at least one ferromagnetic part (4; 22, 23, 84, 85, 113, 114) having a constant thickness e, strictly between 0 and E, defining one or two air gaps, with a total thickness E-e.

**2.** An electro-mechanical rotary actuator according to claim 1, **characterized in that** it is single-phase.

**3.** An electro-mechanical rotary actuator according to claim 1 or 2, **characterized in that** the width of one of the magnetized parts (3; 20, 21; 68; 82, 83; 96; 102; 111, 112) $Y_a$ measured along the mean diameter thereof is equal to: C + S + 2E'
where C is the width of the angular arch covered by the rotor (1, 6) along the mean diameter of the magnetized parts (3; 20, 21; 68; 82, 83; 96; 102; 111, 112), S is the width measured along the mean diameter of the magnetized parts (3; 20, 21; 68; 82, 83; 96; 102; 111, 112) between two adjacent stator poles, E' is between E/2 and E, with

$$\frac{C+2E'}{E} > 3$$

and

$$\frac{L}{E} > 0.75, \text{ preferably } 0.8 < \frac{L}{E} < 0.9,$$

with L being the thickness of a magnetized part (3; 20, 21; 68; 82, 83; 96; 102; 111, 112) magnetized along the direction of magnetization, so as to guarantee a couple resulting from a substantially constant current along the travel and substantially proportional to the current.

4. An electro-mechanical rotary actuator according to claim 1, **characterized in that** the ferromagnetic spacer elements (4; 22, 23, 84, 85, 113, 114) of the mobile part (1, 6) have a thickness e in the direction of magnetization of the magnetized parts (3; 20, 21; 68; 82, 83; 96; 102; 111, 112) having a thickness L, so that:

$$0 < e/L < 0.6.$$

5. An electro-mechanical rotary actuator according to at least one of the preceding claims, **characterized in that** the N magnetized parts are composed of several magnets placed side by side.

6. An electro-mechanical rotary actuator according to claim 1, **characterized in that** the stationary member (2) includes a stator piece having 2N polar pieces (8, 9) having a tubular sector shape, each one being surrounded by a trip coil (10, 10').

7. An electro-mechanical rotary actuator according to claim 1, **characterized in that** the stationary member (2) includes a second stator piece (32) symmetrical with the first stator piece, which also has 2N semi-annular polar pieces, each one being surrounded by a trip coil (40, 40').

8. An electro-mechanical rotary actuator according to claim 1, **characterized in that** the mobile member (1) is formed of a rotary yoke carrying the N magnetized parts (3), axially magnetized, and N ferromagnetic spacer elements (4).

9. An electro-mechanical rotary actuator according to claim 1, **characterized in that** the mobile member (6) has a tubular or semi-tubular shape and carries N tile-shaped magnetized parts (3; 20, 21; 68; 82, 83), radially magnetized, and at least one ferromagnetic spacer element (4; 22, 23, 84, 85, 113, 114), and **in that** the stationary member (2) has 2 N stator poles (63, 64; 77, 78; 11-, 117) has a semi-tubular shape.

10. An electro-mechanical rotary actuator according to at least one of the preceding claims, **characterized in that** the mobile member (1, 6) includes N magnetized parts (3; 20, 21; 68; 82, 83; 96; 102; 111, 112) magnetized after their being positioned on the mobile member (1, 6).

11. An electro-mechanical rotary actuator according to at least one of the preceding claims, **characterized in that** the mobile member (1) includes N magnetized parts (3; 20, 21; 68; 82, 83; 96; 102; 111, 112) housed in cavities provided in the yoke (6) of the mobile member (1), with the zones matching such cavities forming the ferromagnetic spacer elements (4; 22, 23, 84, 85, 113, 114).

12. An electro-mechanical rotary actuator according to at least one of the preceding claims, **characterized in that** the 2N ferromagnetic polar pieces of the stator are interconnected by ferromagnetic isthmus which can be saturated.

**Patentansprüche**

1. Rotierendes, elektromagnetisches Stellglied mit begrenztem Lauf, umfassend einen mit mehreren durch wenigstens eine Anregungsspule (10, 10'; 40, 40'; 65; 75; 76; 92; 92'; 101) angeregten Stator (2) mit mehreren Polen und einen Rotor (1, 6), umfassend N magnetisierte Teile (3; 20, 21; 68; 82, 83; 96; 102; 111; 112), bei dem N eine ganze Zahl ist, wobei diese magnetisierten Teile in einem Luftspalt der konstanten Dicke E angeordnet ist, **dadurch gekennzeichnet, dass** der Stator wenigstens 2N Pole umfasst und dass jeder magnetisierte Teil nebeneinander an einer Treppe angeordnet ist, die aus wenigstens einem ferromagnetischen Teil (4; 22, 23, 84, 85, 113, 114) der strikt zwischen 0 und E inbegriffenen konstanten Dicke e geformt ist, die einen oder zwei Luftspalt(e) der gesamten Dicke E-e bilden.

2. Rotierendes, elektromagnetisches Stellglied gemäß Anspruch 1, **dadurch gekennzeichnet, dass** es einphasig ist.

3. Rotierendes, elektromagnetisches Stellglied gemäß Anspruch 1 oder 2, **dadurch gekennzeichnet, dass** die Breite eines der magnetisierten Teile (3; 20, 21; 68; 82, 83; 96; 102; 111, 112) $Y_a$ auf seinem durchschnittlichen Durchmesser gemessen gleich: C + S + 2E' ist,
wobei C die Breite des winkelförmigen Bogens ist, die vom Rotor (1, 6) auf dem durchschnittlichen Durchmesser der magnetisierten Teile (3; 20, 21; 68; 82, 83; 96; 102; 111, 112) durchlaufen wird, S die auf dem durchschnittlichen Durchmesser der magnetisierten Teile (3; 20, 21; 68; 82, 83; 96; 102; 111, 112) zwischen zwei anliegenden statorischen Polen gemessene Breite ist, E' zwischen E/2 und E inbegriffen ist
wobei

$$\frac{C+2E'}{E} > 3$$

und

$$\frac{L}{E} > 0,75, \text{ bevorzugt } 0,8 < \frac{L}{E} < 0,9,$$

Wobei L die Dicke eines magnetisierten Teils (3; 20, 21; 68; 82, 83; 96; 102; 111, 112) in der Magnetisierungsrichtung bezeichnet, um ein auf den deutlich konstanten Strom zurückzuführendes Moment entlang des Laufs und deutlich proportional zum Strom zu gewährleisten.

4. Rotierendes, elektromagnetisches Stellglied gemäß Anspruch 1, **dadurch gekennzeichnet, dass** die zwischengeschalteten ferromagnetischen Teile (4; 22, 23, 84, 85, 113, 114) des mobilen Teils (1, 6) eine Dicke e in der Richtung der Magnetisierungsrichtung der magnetisierten Teile (3; 20, 21; 68; 82, 83; 96; 102; 111, 112) der Dicke L haben, wie z. B.: 0 < e/L < 0,6.

5. Rotierendes, elektromagnetisches Stellglied gemäß wenigstens einem der voranstehenden Ansprüche, **dadurch gekennzeichnet, dass** die N magnetisierten Teile aus mehreren nebeneinander angeordneten Magneten gebildet werden.

6. Rotierendes, elektromagnetisches Stellglied gemäß Anspruch 1, **dadurch gekennzeichnet, dass** das feste Organ (2) ein statorisches Teil umfasst, das 2N polare Teile (8, 9) in Form eines röhrenförmigen Querschnitts aufweist, die jeweils von einer Anregungsspule (10, 10') umgeben sind.

7. Rotierendes, elektromagnetisches Stellglied gemäß Anspruch 1, **dadurch gekennzeichnet, dass** das feste Organ (2) ein zum ersten statorischen Teil symmetrisches, zweites statorisches Teil (32) umfasst, das ebenfalls 2N polare, halb-ringförmige Teile aufweist, die jeweils von einer Anregungsspule (40, 40') umgeben sind.

8. Rotierendes, elektromagnetisches Stellglied gemäß Anspruch 1, **dadurch gekennzeichnet, dass** das mobile Organ (1) durch ein rotierendes Joch geformt ist, das die N magnetisierten Teile (3), die axial magnetisiert sind, und N zwischengeschaltete ferromagnetische Teile (4) trägt.

**9.** Rotierendes, elektromagnetisches Stellglied gemäß Anspruch 1, **dadurch gekennzeichnet, dass** das mobile Organ (6) eine röhrenförmige oder halbröhrenförmige Form hat und N magnetisierte Teile (3; 20, 21; 68; 82, 83) in Ziegelform, die radial magnetisiert sind, und wenigstens einen zwischengeschalteten ferromagnetischen Teil (4; 22, 23, 84, 85, 113, 114) trägt und dass das feste Organ (2) 2N statorische Pole (63, 64; 77, 78; 116, 117) in halb-röhrenförmiger Form aufweist.

**10.** Rotierendes, elektromagnetisches Stellglied gemäß wenigstens einem der voranstehenden Ansprüche, **dadurch gekennzeichnet, dass** das mobile Organ (1, 6) N magnetisierte Teile (3; 20, 21; 68; 82, 83; 96; 102; 111, 112) umfasst, die nach ihrem Einsetzen auf dem mobilen Organ (1, 6) magnetisiert werden.

**11.** Rotierendes, elektromagnetisches Stellglied gemäß wenigstens einem der voranstehenden Ansprüche, **dadurch gekennzeichnet, dass** das mobile Organ (1) N magnetisierte Teile (3; 20, 21; 68; 82, 83; 96; 102; 111, 112) umfasst, die in Ausnehmungen untergebracht sind, die im Joch (6) des mobilen Organs (1) vorgesehen sind, wobei die komplementären Bereiche zu diesen Ausnehmungen die zwischengeschalteten ferromagnetischen Teile (4; 22, 23, 84, 85, 113, 114) formen.

**12.** Rotierendes, elektromagnetisches Stellglied gemäß wenigstens einem der voranstehenden Ansprüche, **dadurch gekennzeichnet, dass** die 2N ferromagnetischen polaren Teile des Stators untereinander durch sättigbare, ferromagnetische Isthmen verbunden sind.

Fig.1

FIGURE 1

FIGURE 2

FIGURE 3

FIGURE 4

FIGURE 5

FIGURE 6

FIGURE 7

FIGURE 8

FIGURE 9

FIGURE 10

FIGURE 11

FIGURE 12

**RÉFÉRENCES CITÉES DANS LA DESCRIPTION**

**Documents brevets cités dans la description**

- US 4510403 A
- EP 558362 A
- US 5038064 A
- EP 0844722 A
- FR 2386179